# DEMANDE DE BREVET EUROPEEN

(11) **EP 1 607 266 A1**
(43) Date de publication de la demande: **21.12.2005**
(21) Numéro de dépôt: 05356108.0
(22) Date de dépôt: 16.06.2005
(51) Int. Cl.: B60P 3/36

(54) **Véhicule du type caravane ou camping-car**

(30) Priorité: 17.06.2004 FR 0406589
(71) Demandeur: Trigano VDL, 75019 Paris (FR)
(72) Inventeur: Delegue, Ronald, 07500 Guilherand Granges (FR)
(74) Mandataire: Thibault, Jean-Marc

(57) **Abrégé**

L'invention concerne un véhicule du type caravane ou camping-car comportant notamment un châssis roulant supportant un plancher (**3**) et un plafond reliés entre eux par des parois avant (**5**), arrière (**6**), droite (**7**) et gauche (**8**), dans lesquelles sont aménagées des baies pour constituer une porte (**11**) et une série de fenêtres.

Selon l'invention, un tel véhicule comporte au moins deux baies de fenêtre dites hautes (**12**_{**1**} - **12**_{**5**}) possédant chacune une hauteur comprise entre 600 et 800 mm, avec son imposte (**13**) située entre 100 et 330 mm du plafond, au moins deux baies de fenêtre dites hautes étant équipée chacune à proximité d'au moins l'un de ses côtés verticaux, d'un meuble de rangement dit haut **(20**_{**1**}**)** d'une hauteur minimum de 1 000 mm pour constituer un élément raidisseur.

## Description

La présente invention concerne le domaine technique général de la caravane ou du camping-car.

Une caravane ou un camping-car doit en tant que véhicule, respecter certaines caractéristiques techniques en termes notamment de tenue de route, de rigidité et de poids. Il s'avère également qu'un tel véhicule de loisirs doit offrir un aménagement intérieur aussi confortable qu'agréable. C'est ainsi que l'espace intérieur d'un tel véhicule est utilisé au mieux pour permettre la mise en place d'éléments de mobilier combinées à des baies formant des fenêtres pour assurer un éclairage naturel à l'intérieur du véhicule. La plupart des véhicules offre ainsi un confort et une sécurité certaine.

Dans l'état de la technique, il a été proposé de nombreuses formes d'aménagements intérieurs de tels véhicules. Par exemple, le brevet FR 1 277 909 décrit une caravane aménagée pour présenter une salle de séjour dégagée d'armoires, accolée à une chambre destinée à recevoir du mobilier de rangement. Ainsi, des meubles sont situés au niveau de l'imposte et des côtés verticaux des baies de fenêtres aménagés dans les parois avant et arrière.

Le Demandeur a constaté que les personnes lorsqu'elles se trouvent à l'intérieur d'un tel véhicule, ont un champ de vision à travers les baies de fenêtre relativement limité. Dans le même sens, la luminosité naturelle issue de baies de fenêtres apparaît parfois trop faible à l'intérieur d'un tel véhicule. Il s'ensuit un sentiment d'inconfort, de confinement, voire d'oppression pour certains utilisateurs de tels véhicules. Le déposant a ainsi mis en évidence qu'il existait le besoin d'augmenter le champ de vision à travers les baies de fenêtre pour les personnes positionnées à l'intérieur du véhicule, tout en maintenant au véhicule d'une part, ses caractéristiques techniques notamment de tenue de route et de rigidité, et d'autre part, ses qualités de confort en particulier de volume de rangement disponible à l'intérieur du véhicule.

La présente invention vise donc à satisfaire ce besoin en offrant un véhicule du type caravane ou camping-car conçu pour augmenter le champ de vision des personnes situées à l'intérieur d'un tel véhicule qui, par ailleurs, conserve ses qualités de confort et ses caractéristiques techniques, notamment en termes de tenue de route et de rigidité.

Pour atteindre un tel objectif, l'objet de l'invention concerne un véhicule du type caravane ou camping-car comportant notamment un châssis roulant supportant un plancher et un plafond reliés entre eux par des parois avant, arrière, droite et gauche, dans lesquelles sont aménagées des baies pour constituer une porte et une série de fenêtres, les parois étant pourvues intérieurement de meubles de rangement.

Selon l'invention, un véhicule du type caravane ou camping-car comporte au moins deux baies de fenêtre dites hautes possédant chacune une hauteur comprise entre 600 et 800 mm, avec son imposte située entre 100 et 330 mm du plafond, au moins deux baies de fenêtre dites hautes étant équipées chacune à proximité d'au moins l'un de ses côtés verticaux, d'un meuble de rangement dit haut d'une hauteur minimum de 1000 mm pour constituer un élément raidisseur.

Un tel véhicule permet ainsi d'augmenter le champ de vision d'une personne à travers les baies de fenêtre dites hautes, même lorsqu'une telle personne occupe une station debout. Un tel véhicule conserve par ailleurs ses capacités de rangement et de rigidité par la mise en oeuvre de meubles de rangement assurant une fonction de raidissement.

Selon une variante préférée de réalisation, un tel véhicule comporte trois, quatre ou cinq baies de fenêtre dites hautes.

Selon une variante préférée de réalisation, le véhicule comporte , en tant que baies de fenêtre, uniquement des baies de fenêtre dites hautes à l'exception de celle(s) réalisée(s) sur la paroi avant.

Selon une autre caractéristique préférée de réalisation, toutes les baies de fenêtre dites hautes sont équipées chacune à proximité d'au moins l'un de ses côtés verticaux, d'un meuble de rangement.

Avantageusement, au moins deux baies de fenêtre dites hautes sont équipées chacune, sur chacun de ses côtés verticaux d'un meuble de rangement.

Selon une autre variante de réalisation, au moins deux et de préférence, l'ensemble des baies de fenêtre dites hautes ne comporte pas de meubles de rangement entre les impostes et le plafond.

Selon une variante préférée de réalisation, chaque baie de fenêtre dite haute possède une hauteur de préférence égale sensiblement à 750 mm.

Selon une autre variante préférée de réalisation, chaque baie de fenêtre dite haute a son imposte située de préférence à une distance sensiblement égale à 250 mm du plafond.

Un autre avantage du véhicule selon l'invention concerne le fait qu'il comporte une gaine technique pour le passage de câbles ou analogues située sur au moins une partie de la zone périphérique de jonction entre les parois et le plafond.

Avantageusement, la gaine technique s'étend au moins au dessus de chaque baie de fenêtre dite haute en se raccordant à des meubles de rangement voisins.

Diverses autres caractéristiques ressortent de la description faite ci-dessous en référence aux dessins annexés qui montrent, à titre d'exemples non limitatifs, des formes de réalisation de l'objet de l'invention.
Les **Figures 1** à **4** sont des vues en élévation respectivement droite, gauche, avant et arrière d'un exemple de réalisation d'un véhicule conforme à l'invention.
La **Figure 5** est une vue en plan prise sensiblement selon les lignes V-V de la **Fig. 1**.

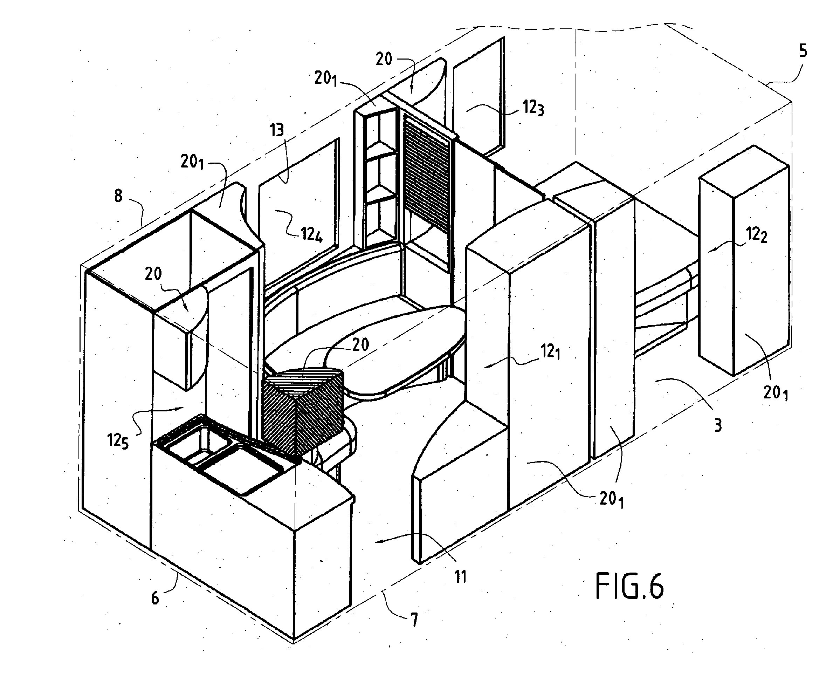

La **Figure 6** est une vue partielle en perspective montrant un exemple d'aménagement intérieur d'un véhicule conforme à l'invention.
La **Figure 7** est une vue en coupe transversale prise sensiblement selon les lignes VII-VII de la **Fig. 5**, d'un détail caractéristique faisant partie de l'objet de l'invention.

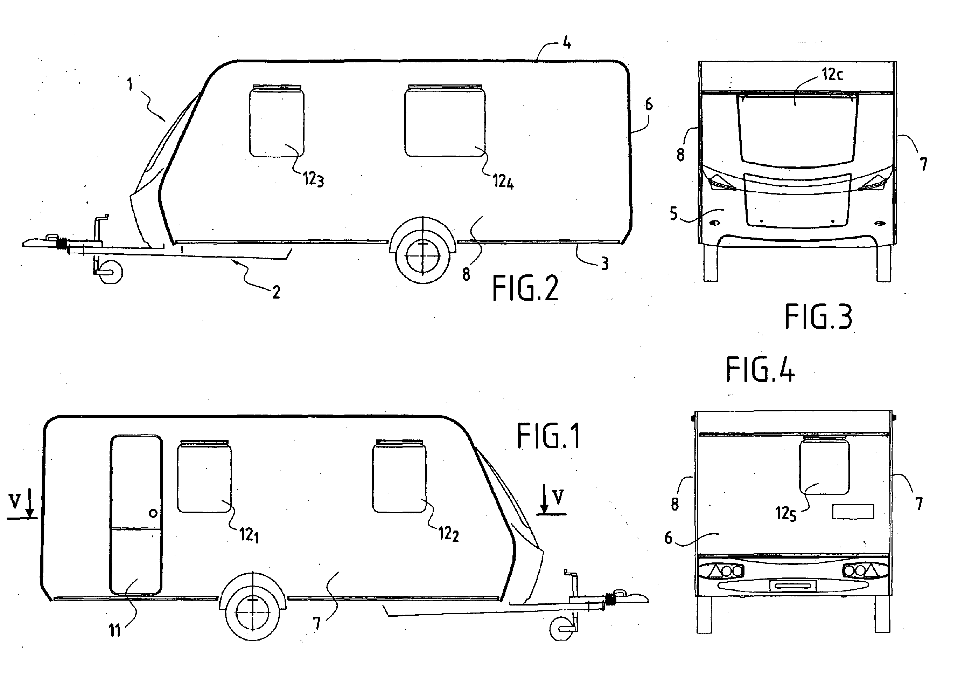

Les **Fig. 1** à **4** illustrent un exemple de réalisation d'une caravane **1** mettant en oeuvre l'objet de l'invention. Bien entendu, l'objet de l'invention peut s'appliquer à un véhicule autre qu'une caravane tel qu'un camping-car. La caravane **1** comporte de manière classique, notamment un châssis roulant **2** qui ne sera pas décrit plus précisément dans la mesure où il ne fait pas partie précisément de l'objet de l'invention. Dans le cas d'un camping-car, le châssis roulant **2** est du type motorisé. Un tel châssis roulant **2** supporte un plancher **3** et un plafond **4** reliés entre eux par des parois avant **5,** arrière **6,** droite **7** et gauche **8.** Bien entendu, de telles parois peuvent présenter des formes et des dimensions diverses.

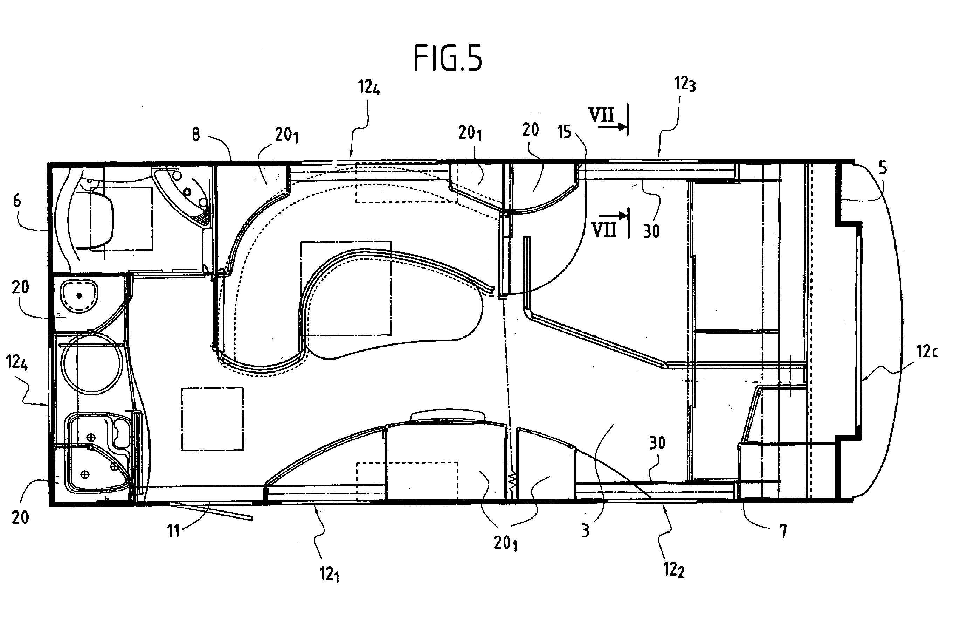

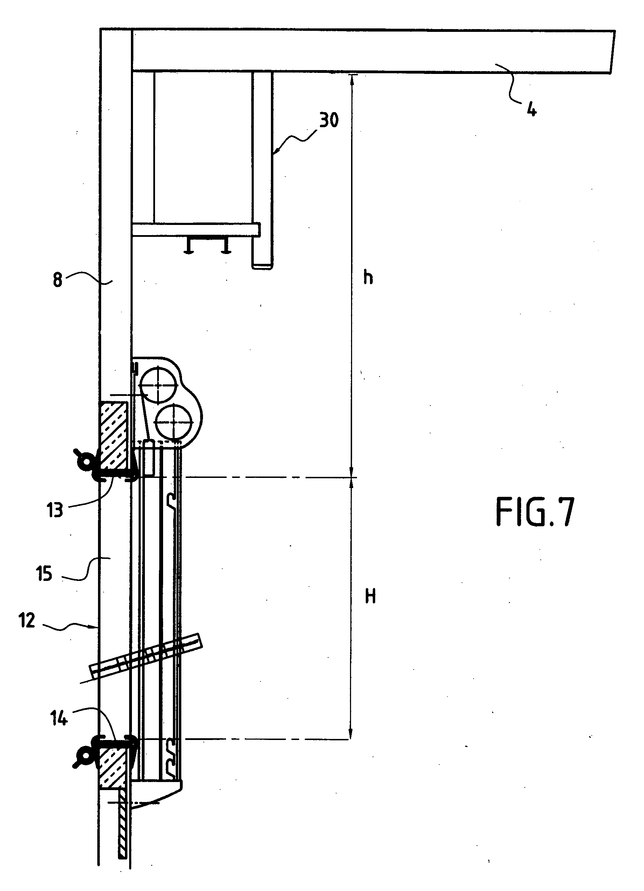

D'une manière tout aussi classique, des ouvertures sont aménagées dans les parois de manière à constituer au moins une baie de porte **11** et une série de baies de fenêtre désignées par la référence générale **12**, comportant un indice pour préciser leur position sur les parois. Tel que cela ressort plus précisément des **Fig. 5** et **7**, une baie de fenêtre **12** présente une partie supérieure **13** appelée aussi imposte ainsi qu'une partie inférieure **14** reliées entre elles par des côtés verticaux **15.**

Conformément à l'invention, le véhicule **1** comporte au moins deux, et dans l'exemple illustré cinq baies de fenêtre dites hautes **12**_{**1**} à **12**_{**5**}**,** possédant chacune une hauteur **H** comprise entre 600 et 800 mm et de préférence égale sensiblement à 750 mm, cette hauteur **H** étant prise entre les parties supérieure **13** et inférieure **14** de la baie. De même, chaque baie de fenêtre dite haute **12**_{**1**} à **12**_{**5**} a son imposte **13** située à une distance **h** du plafond **4** comprise entre 100 et 330 mm et de préférence sensiblement égale à 250 mm. Dans l'exemple illustré sur les figures, le véhicule **1** comporte deux baies de fenêtre dites hautes **12**_{**1**}**, 12**_{**2**} aménagées dans la paroi droite **7** respectivement vers l'arrière et vers l'avant du véhicule, deux baies de fenêtres dites hautes **12**_{**3**}**, 12**_{**4**} aménagées dans la paroi gauche **8** respectivement vers l'avant et le milieu du véhicule, et une baie de fenêtre dite haute **12**_{**5**} aménagée dans la paroi arrière **6.** Il est à noter que dans l'exemple illustré, le véhicule **1** comporte une baie de fenêtre **12**_{**c**} dite conventionnelle ne correspondant pas à la définition donnée ci-dessus. Chaque baie de fenêtre **12**_{**1**} à **12**_{**5**} présentant de telles caractéristiques est dite haute dans la mesure où elle est aménagée dans une zone relativement proche du plafond **4** en s'étendant sur une hauteur **H** relativement importante permettant d'obtenir une bonne luminosité à l'intérieur du véhicule et une vision à travers ladite baie pour une personne même placée en position debout à l'intérieur du véhicule.

Dans l'exemple illustré, le véhicule **1** comporte cinq baies de fenêtre dites hautes **12.** Selon des variantes préférées de réalisation, un tel véhicule **1** peut comporter trois ou quatre baies de fenêtre dites hautes **12.**

Selon une variante préférée de réalisation illustrée sur les dessins, le véhicule **1** comporte en tant que baies de fenêtre, uniquement des baies de fenêtre dites hautes **12**_{**1**} à **12**_{**5**}**,** à l'exception de celle **12**_{**c**} réalisée sur la paroi avant **5.** De cette manière, le véhicule **1** comporte un ensemble homogène de fenêtres dites hautes **12**_{**1**} à **12**_{**5**}**,** permettant d'accroître le champ de vision des utilisateurs et la luminosité à l'intérieur du véhicule de façon uniforme. Bien entendu, il peut être envisagé de réaliser de façon supplémentaire aux baies de fenêtre dites hautes, au moins une baie de fenêtre ne correspondant pas à la définition des baies de fenêtre dites hautes.

De manière classique, le véhicule **1** est équipé intérieurement notamment de meubles de rangement **20** à caractère fermé ou ouvert. Conformément à l'invention, au moins deux baies de fenêtre dites hautes **12**_{**1**} - **12**_{**5**}, sont équipées chacune à proximité de l'un de ses côtés verticaux **15,** d'un meuble de rangement ouvert ou fermé dit haut **20**_{**1**} d'une hauteur minimum de 1 000 mm pour constituer un élément raidisseur. Il doit être considéré que la mise en place d'un meuble de rangement dit haut **20**_{**1**} sur la paroi, à proximité d'une baie de fenêtre dite haute permet d'augmenter la rigidité de la structure du véhicule en relation de ladite baie. Dans l'exemple de réalisation illustré sur les dessins, les baies de fenêtre dites hautes **12**_{**1**}**, 12**_{**2**}**,** et **12**_{**4**} sont équipées à proximité d'un bord vertical **15,** d'un meuble de rangement dit haut **20**_{**1**}.

Il est à noter qu'un meuble de rangement est dit haut en raison de sa caractéristique de hauteur et non pas en relation de sa position par rapport au plafond **4.** Il est clair qu'un meuble de rangement dit haut **20**_{**1**} peut être positionné à tout endroit entre le plafond **4** et la plancher **3.**

Selon une caractéristique préférée de réalisation, toutes les baies de fenêtre dites hautes **12**_{**1**} à **12**_{**5**} sont équipées chacune à proximité d'au moins l'un de ses côtés verticaux **15** d'un meuble de rangement classique **20** ou dit haut **20**_{**1**} pour constituer un élément raidisseur.

Selon une variante préférée de réalisation, au moins deux baies de fenêtre dites hautes à savoir **12**_{**2**} et **12**_{**5**} dans l'exemple illustré sont équipées chacune sur chacun de ses côtés verticaux **15**, d'un meuble de rangement **20.**

Il doit être noté que dans un exemple préféré de réalisation au moins deux et de préférence, l'ensemble des baies de fenêtre dites hautes **12**_{**1**} à **12**_{**5**} ne comportent pas de meubles de rangement **20** entre les impostes **13** et le plafond **4** permettant d'augmenter le champ de vision et le confort des personnes situées à l'intérieur du véhicule. En effet, le positionnement des meubles de rangement latéralement auxdites baies permet, de façon supplémentaire à sa fonction de rigidification, de dégager le champ de vision vers l'extérieur conduisant à une sensation d'augmentation de l'espace disponible. De façon plus fondamentale, l'absence de meubles de rangement sur toute la périphérie haute du véhicule conduit à abaisser le centre de gravité de l'ensemble de sorte que la tenue de route du véhicule est améliorée.

Selon une autre caractéristique de l'invention, le véhicule **1** comporte une gaine technique **30** permettant le passage des câbles ou analogues. Cette gaine technique **30** est située sur au moins une partie de la zone périphérique de la jonction entre les parois **5** à **8** et le plafond **4.** La gaine technique **30** s'étend au moins au dessus de chaque baie de fenêtre dite haute **12**_{**1**} à **12**_{**5**} en se raccordant à des meubles de rangement voisins **20** ou **20**_{**1**}**.** La réalisation d'une gaine technique **30** à la périphérie haute des parois **5** à **8** permet de rassembler les câbles en un lieu privilégié, évitant ainsi la réalisation éparse de passages de câbles affaiblissant la rigidité du plafond.

L'invention n'est pas limitée aux exemples décrits et représentés car diverses modifications peuvent y être apportées sans sortir de son cadre.

## Revendications

1. Véhicule du type caravane ou camping-car comportant notamment un châssis roulant (**2**) supportant un plancher (**3**) et un plafond (**4**) reliés entre eux par des parois avant (**5**), arrière (**6**), droite (**7**) et gauche (**8**), dans lesquelles sont aménagées des baies pour constituer une porte (**11**) et une série de fenêtres (**12**), les parois étant pourvues intérieurement de meubles de rangement, **caractérisé en ce qu'**il comporte au moins deux baies de fenêtre dites hautes (**12**_{**1**} - **12**_{**5**}) possédant chacune une hauteur comprise entre 600 et 800 mm, avec son imposte (**13**) située entre 100 et 330 mm du plafond, au moins deux baies de fenêtre dites hautes étant équipées chacune à proximité d'au moins l'un de ses côtés verticaux (**15**)**,** d'un meuble de rangement dit haut (**20**_{**1**}) d'une hauteur minimum de 1 000 mm pour constituer un élément raidisseur.

2. Véhicule du type caravane ou camping-car selon la revendication 1, **caractérisé en ce qu'**il comporte trois, quatre ou cinq baies de fenêtre dites hautes (**12**_{**1**} à **12**_{**5**}).

3. Véhicule du type caravane ou camping-car selon la revendication 1 ou 2, **caractérisé en ce qu'**il comporte, en tant que baies de fenêtre (**12**)**,** uniquement des baies de fenêtre dites hautes (**12**_{**1**} à **12**_{**5**}) à l'exception de celle(s) (**12**_{**c**}) réalisée(s) sur la paroi avant (**5**)**.**

4. Véhicule du type caravane ou camping-car selon la revendication 3, **caractérisé en ce que** toutes les baies de fenêtre dites hautes (**12**_{**1**} à **12**_{**5**}) sont équipées chacune à proximité d'au moins l'un de ses côtés verticaux, d'un meuble de rangement (**20, 20**_{**1**})**.**

5. Véhicule du type caravane ou camping-car selon l'une des revendications 1 à 3, **caractérisé en ce qu'**au moins deux baies de fenêtre dites hautes (**12**_{**2**}, **12**_{**4**}) sont équipées chacune, sur chacun de ses côtés verticaux d'un meuble de rangement (**20**_{**1**}).

6. Véhicule du type caravane ou camping-car selon l'une des revendications 1 à 5, **caractérisé en ce qu'**au moins deux et de préférence, l'ensemble des baies de fenêtre dites hautes (**12**_{**1**} à **12**_{**5**}) ne comporte pas de meubles de rangement entre les impostes (**13**) et le plafond (**4**).

7. Véhicule du type caravane ou camping-car selon l'une des revendications 1 à 6, **caractérisé en ce que** chaque baie de fenêtre dite haute (**12**_{**1**} à **12**_{**5**}) possède une hauteur de préférence égale sensiblement à 750 mm.

8. Véhicule du type caravane ou camping-car selon l'une des revendications 1 à 7, **caractérisé en ce que** chaque baie de fenêtre dite haute (**12**_{**1**} à **12**_{**5**}) a son imposte (**13**) située de préférence à une distance sensiblement égale à 250 mm du plafond.

9. Véhicule du type caravane ou camping-car selon l'une des revendications 1 à 8, **caractérisé en ce qu'**il comporte une gaine technique (**30**) pour le passage de câbles ou analogues, située sur au moins une partie de la zone périphérique de jonction entre les parois (**5** - **8**) et le plafond (**4**)**.**

10. Véhicule du type caravane ou camping-car selon la revendication 9, **caractérisé en ce que** la gaine technique (**30**) s'étend au moins au dessus de chaque baie de fenêtre dite haute (**12**_{**1**} - **12**_{**5**}) en se raccordant à des meubles de rangement voisins (**20**, **20**_{**1**}).
